# FASCICULE DE BREVET EUROPEEN

(11) **EP 0 654 663 B1**
(45) Date de publication et mention de la délivrance du brevet: **19.09.2001**
(21) Numéro de dépôt: 94402612.9
(22) Date de dépôt: 17.11.1994
(51) Int. Cl.: G01N 21/71

(54) **Procédé d'analyse élémentaire par spectrométrie d'émission optique sur plasma produit par laser en présence d'argon**
Verfahren zur Elementaranalyse durch optische Emissionspektroskopie in einem durch Laser in Anwesenheit von Argon erweckten Plasma
Method for elementary analysis through optical emission spectroscopy in a plasma produced by a laser beam in presence of Argon

(30) Priorité: 19.11.1993 FR 9313855
(43) Date de publication de la demande: 24.05.1995
(73) Titulaire: COMMISSARIAT A L'ENERGIE ATOMIQUE, 75015 Paris Cédex 15 (FR)
(72) Inventeur: Andre, Nadine, F-92390 Villeneuve-La-Garenne (FR); Mauchien, Patrick, F-911120 Palaiseau (FR); Semerok, Alexandre, F-91190 Gif-Sur-Yvette (FR)
(74) Mandataire: Dubois-Chabert, Guy

(56) Documents cités:
- JP-A- 2 254 345
- APPLIED SPECTROSCOPY, vol.46, no.9, 1 Septembre 1992 pages 1382 - 1387 AGUILERA ET AL. 'DETERMINATION OF CARBON CONTENT,ETC.'
- APPLIED SPECTROSCOPY, vol.47, no.5, 1 Mai 1993 pages 606 - 608 ARAGON ET AL. 'DETERMINATION OF CARBON CONTENT,ETC.'
- APPLIED SPECTROSCOPY, vol.42, no.7, 1 Septembre 1988 pages 1231 - 1239 ARROWSMITH ET AL. 'ENTRAINMENT AND TRANSPORT OF LASER ABLATED PLUMES,ETC.'

## Description

### Domaine technique

La présente invention a pour objet un procédé d'analyse élémentaire par spectrométrie d'émission optique sur plasma produit par laser en présence d'argon. Elle s'applique au contrôle "in-situ" d'échantillons et à la caractérisation de pièces usinées. Elle trouve, en particulier, une application dans le domaine de l'industrie nucléaire, pour le contrôle de matériaux radioactifs.

### Etat de la technique

Il est connu de mesurer les concentrations élémentaires des éléments par une analyse spectrochimique utilisant le rayonnement d'émission d'un plasma produit par laser. Cette technique analytique est basée sur une ablation laser, c'est-à-dire un arrachement de matière sous l'effet d'une chaleur élevée.

Le procédé d'analyse par spectrométrie d'Emission Optique sur Plasma produit par Laser met en oeuvre une telle ablation laser. Il consiste à focaliser, à la surface du solide à étudier, un faisceau laser pulsé de forte puissance crête (typiquement quelques GW/cm²) de manière à produire un plasma constitué des éléments chimiques présents dans les premiers microns de la surface. Ce plasma émet un rayonnement lumineux dont l'analyse des raies atomiques permet de connaître la concentration des différents éléments dans le solide.

Cependant, un tel procédé présente une sensibilité peu élevée qui, pour certains cas analytiques, s'avère tout à fait insuffisante.

En outre, il est connu que certains gaz constituent une atmosphère plus favorable aux analyses spectrales que l'atmosphère naturelle (c'est-à-dire l'air).

Une technique pour améliorer l'intensité des raies lors des analyses spectrales, et donc pour améliorer la précision des mesures, consiste à disposer l'échantillon à analyser dans une enceinte close remplie d'un gaz et, plus particulièrement, d'argon.

Selon cette technique les mesures sont effectuées en atmosphère confinée ; cette technique ne peut donc être mise en oeuvre qu'en laboratoire.

Par ailleurs, l'article intitulé « Determination of carbon content in steel using laser-induced breakdown spectroscopy », publié dans Applied spectroscopy, vol. 46, no. 9, 01/09/92, décrit un procédé d'analyse par focalisation d'un faisceau laser et spectrométrie du rayonnement lumineux émis par le plasma obtenu. Ce procédé, destiné à éliminer les informations parasites dues au carbone contenu dans le gaz carbonique de l'atmosphère, est mis en oeuvre dans une atmosphère confinée créée dans une chambre, ouverte sur l'extérieur, par un balayage gazeux.

### Exposé de l'invention

La présente invention a justement pour but de remédier à ces inconvénients en proposant un procédé de mesure des concentrations d'éléments utilisant un jet d'argon et pouvant être mis en oeuvre "in situ".

De façon plus précise, l'invention concerne un procédé d'analyse élémentaire d'un échantillon. Ce procédé consiste à :
- choisir un échantillon solide à analyser situé en atmosphère naturelle, sans avoir à placer cet échantillon dans une chambre constituant une zone confinée ;
- simultanément, focaliser un faisceau laser (4) sur ledit échantillon solide à analyser de façon à produire un plasma (12) en un point d'impact (P) de la surface de cet échantillon et souffler un jet de gaz directement sur ce point d'impact (P) de l'échantillon (6) ;
- analyser un spectre (S') du rayonnement lumineux émis par le plasma ; et
- déterminer, à partir de cette analyse de spectre, la composition élémentaire de l'échantillon solide.

Avantageusement, le jet de gaz soufflé sur l'échantillon est un jet d'argon.

Ce procédé a donc l'avantage d'être mis en oeuvre en atmosphère naturelle (ou atmosphère non-confinée). Il a de plus l'avantage de ne nécessiter aucun contact avec l'échantillon et de ne nécessiter préalablement aucune préparation chimique des échantillons. En outre, sa mise en oeuvre et son fonctionnement sont simples, sa sensibilité est bonne et les mesures sont obtenues rapidement. Ce procédé peut donc être aisément mis en oeuvre "in situ".

Ce procédé a en outre l'avantage de s'appliquer à de nombreuses sortes de matériaux conducteurs ou non conducteurs ainsi qu'aux matériaux réputés d'analyse délicate tels que les céramiques, les verres, les composites, ou encore aux matériaux radioactifs puisque les mesures sont effectuées sans contact.

### Brève description des dessins

- La figure 1 est un schéma de principe de l'appareillage mettant en oeuvre le procédé de l'invention ;
- la figure 2 représente les courbes d'intensité du signal d'émission et d'écart type en fonction du débit d'argon ;
- la figure 3 représente les spectres d'un même échantillon obtenus par des procédés, respectivement, utilisant et n'utilisant pas de jet d'argon ; et
- la figure 4 représente les spectres d'un échantillon de fer obtenus, respectivement, sans jet d'argon et avec un jet d'argon de 3 l/mn.

### Exposé détaillé de modes de réalisation

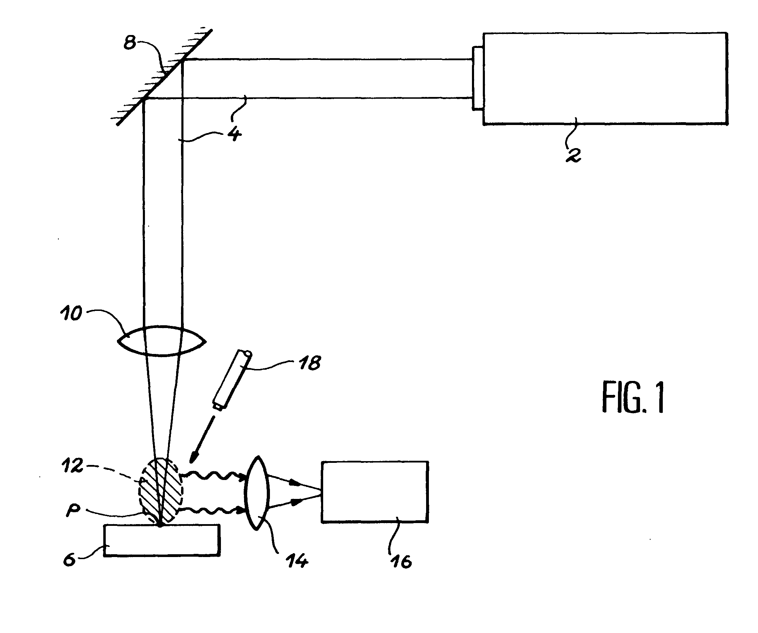

La figure 1 représente le schéma de principe d'un appareillage mettant en oeuvre l'invention. Une source laser 2 émet un faisceau laser 4 pulsé, dirigé vers l'échantillon 6. Ce faisceau laser 4 a une forte puissante crête (de l'ordre de quelques GW/cm²). Selon un mode de réalisation, le faisceau laser 4 est dirigé directement vers l'échantillon 6. Selon un autre mode de réalisation, représenté sur la figure 1, le faisceau laser 4 est dirigé vers un miroir 8 qui, par réflexion, oriente le faisceau 4 vers l'échantillon 6.

Ce faisceau 4 est focalisé vers l'échantillon 6 au moyen d'un objectif de focalisation 10 qui peut être, par exemple, une simple lentille convergente ou bien un objectif de microscope réflectif du type "cassegrain", ou de nombreux autres types d'objectifs de focalisation.

L'énergie déposée sur l'échantillon 6 par le faisceau laser 4 est de l'ordre de quelques Joules/cm² et provoque l'arrachement de la matière et la formation d'un plasma lumineux 12. Une partie au moins de la lumière émise par le plasma 12 est focalisée par le système optique 14, puis collectée par le spectromètre 16.

Ce spectromètre 16 assure la séparation des différentes radiations issues du plasma 12. Des moyens de traitement, non représentés sur la figure 1, assurent l'analyse spectrale des raies d'émission obtenues en sortie du spectromètre 16. On peut ainsi déterminer la concentration des différents éléments constituant l'échantillon.

Des moyens de projection d'un jet d'argon ont été représentés sur la figure 1. Ces moyens de projection peuvent être, par exemple, un conduit 18 de gaz tel qu'utilisé classiquement dans les dispositifs nécessitant un apport de gaz. Ce conduit 18 doit, toutefois, être d'une rigidité suffisante pour souffler le jet d'argon 20 au point d'impact P du faisceau laser 4 sur l'échantillon 6. Un faible jet d'argon 20 soufflé au point P suffit à créer des conditions plus favorables à l'analyse spectrale de la lumière émise par le plasma 12.

Un tel jet d'argon 20 a, en outre, l'avantage de protéger l'objectif 10 de focalisation des particules de matière arrachées par le faisceau laser et projetées vers l'objectif 10, ces particules projetées étant déviées de leur trajectoire par le jet d'argon.

Pour obtenir des résultats optimum, on peut mettre en oeuvre ce procédé d'analyse élémentaire en utilisant, par exemple, un faisceau laser ultra violet délivrant une raie de 266 nm et un objectif de microscope réflectif du type "cassegrain" permettant d'obtenir, sur l'échantillon, une tâche focale de 10 µm de diamètre. Une telle mise en oeuvre permet de produire un plasma dont le diamètre n'excède pas 200 µm, le diamètre du plasma devant être inférieur au diamètre du jet d'argon soufflé sur l'échantillon.

De plus, la sensibilité des mesures peut être encore accrue en choisissant un débit d'argon optimal, ce débit d'argon optimal étant d'environ 3 l/mn.

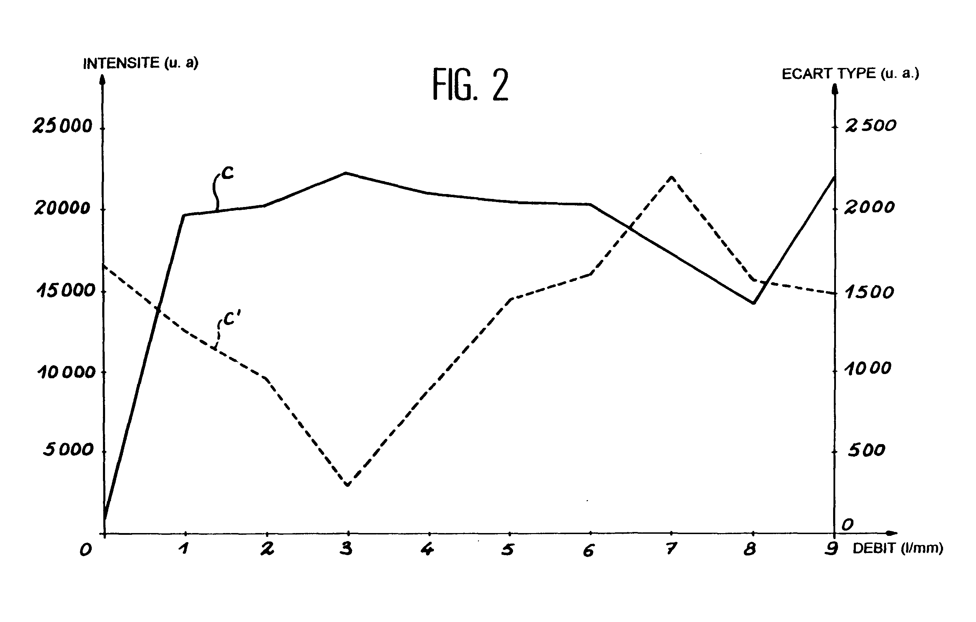

Sur la figure 2, on a représenté une courbe montrant l'intensité du signal d'émission en fonction du débit du jet d'argon soufflé sur l'échantillon. De façon plus précise, on a représenté en abscisse le débit d'argon (en litres par minute) et en ordonnée, d'une part, l'intensité d'émission et, d'autre part, l'écart type des mesures obtenues. La courbe C représente donc l'intensité du signal d'émission qui est maximale pour un débit d'argon de 3 l/mn. La courbe C', en pointillés, représente l'écart type entre les mesures, écart type minimal pour un débit d'argon de 3 l/mn.

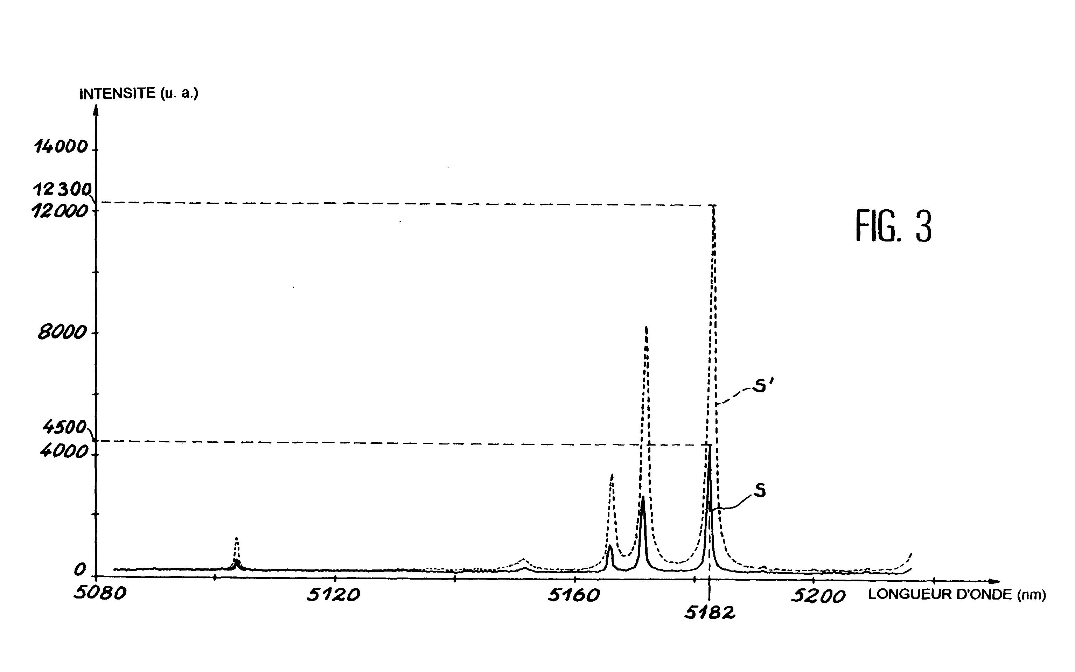

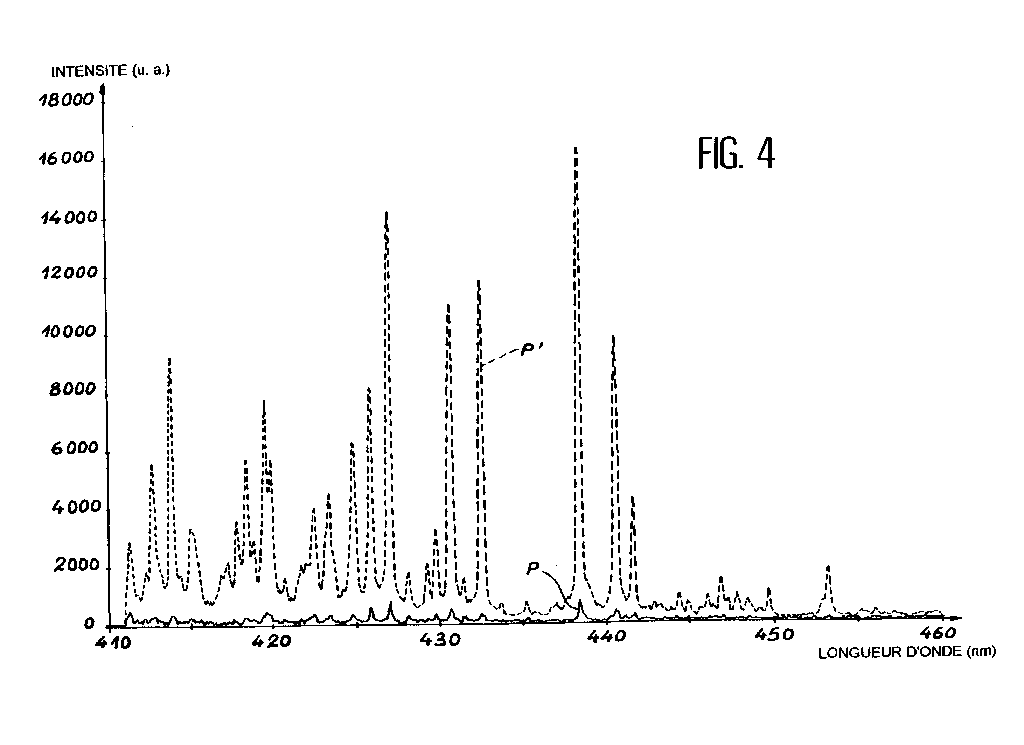

Pour montrer l'importance du choix d'un débit optimum, on a représenté, sur les figures 3 et 4 suivantes, des spectres d'émission du plasma, respectivement, pour un débit d'argon quelconque et pour un débit d'argon avoisinant les 3 l/mn.

Plus précisément, la figure 3 représente les spectres d'émission de plasma d'un même échantillon produits avec et sans jet d'argon. Le spectre S, représenté en trait continu, correspond à un spectre d'émission du plasma d'un échantillon analysé dans une atmosphère naturelle (l'air) sans jet d'argon. Le spectre S', représenté en pointillés, correspond à un spectre d'émission du plasma d'un échantillon analysé dans les conditions de l'invention.

Les échantillons dont proviennent les spectres S et S' sont identiques.

La longueur d'onde de ces spectres étant représentée en abscisse et l'intensité d'émission en ordonnée, on peut lire sur cette figure 3 les intensités des spectres S' et S données en unités arbitraires (u.a.). Ces spectres S et S' ayant des raies d'émission de même longueurs d'ondes, on comprend bien que les échantillons dont proviennent ces spectres sont identiques. Cependant, l'intensité du spectre S', provenant d'un échantillon sur lequel est soufflé un jet d'argon lors de l'analyse, est bien supérieure à l'intensité du spectre S provenant d'un échantillon analysé en atmosphère naturelle sans jet d'argon. De façon plus précise, une raie d'émission à environ 518,2 nm produite par l'échantillon analysé en atmosphère naturelle sans présence d'argon (spectre S) a une intensité de l'ordre de 4 500 en u.a.. Cette même raie d'émission à environ 518,2 nm est émise avec une intensité d'environ 12 300 u.a. lorsque l'échantillon est analysé en présence d'un jet d'argon. Le rapport d'intensité des spectres S et S' est 12 300/4 500 ≅ 2,73.

De façon symétrique, la figure 4 représente les spectres d'émission de plasmas provenant d'un même échantillon et produits, respectivement, sans jet d'argon et avec un jet d'argon de 3 l/mn. Le spectre P, représenté en trait continu, correspond au spectre d'émission d'un plasma de fer analysé dans une atmosphère naturelle sans jet d'argon. Le spectre P', en pointillés, représente un spectre d'émission d'un plasma de fer analysé dans les conditions optimales de l'invention avec un jet d'argon de 3 l/mn.

La longueur d'onde de ces spectres du fer étant représentée en abscisse et l'intensité d'émission en ordonnée, on peut voir sur cette figure 4 que, pour une même raie d'émission, le spectre P' provenant d'un échantillon de fer sur lequel on a soufflé un jet d'argon a une intensité très largement supérieure à celle du spectre P.

De façon plus précise, pour une raie d'émission d'environ 438 nm , le spectre P du fer obtenu en atmosphère naturelle sans argon a une intensité d'environ 800 u. a. tandis que le spectre P' obtenu avec un jet d'argon de 3 l/mn a une intensité supérieure à 16 000 u. a.

En regardant simultanément les figures 3 et 4, on constate effectivement que le jet d'argon est optimum pour un débit de 3 l/mn puisque le spectre P' obtenu pour un jet d'argon de débit 3 l/mn est plus précis encore que le spectre S' obtenu pour un jet d'argon dont le débit est quelconque.

Aussi, le procédé selon l'invention qui consiste à souffler un jet d'argon sur l'échantillon à analyser permet d'améliorer l'intensité des raies d'émission d'un facteur de l'ordre de 2,5 à 3 pour un jet d'argon de débit quelconque et d'un facteur 20 pour un débit optimum. La précision des résultats en est, par conséquent, améliorée.

## Revendications

1. Procédé d'analyse élémentaire d'un échantillon solide, **caractérisé en ce qu'**il consiste à :
- choisir un échantillon solide à analyser situé en atmosphère naturelle, sans avoir à placer cet échantillon dans une chambre constituant une zone confinée ;
- simultanément, focaliser un faisceau laser (4) sur ledit échantillon solide à analyser de façon à produire un plasma (12) en un point d'impact (P) de la surface de cet échantillon et souffler un jet de gaz directement sur ce point d'impact (P) de l'échantillon (6) ;
- analyser un spectre (S') du rayonnement lumineux émis par le plasma ; et
- déterminer, à partir de cette analyse de spectre, la composition élémentaire de l'échantillon solide.

2. Procédé selon la revendication 1, **caractérisé en ce que** le jet de gaz soufflé sur l'échantillon solide est un jet d'argon.

3. Procédé selon la revendication 1 ou 2, **caractérisé en ce que** le jet de gaz soufflé sur l'échantillon a un diamètre supérieur à celui du plasma obtenu en surface de l'échantillon.

4. Procédé selon la revendication 2 ou 3, **caractérisé en ce que** le jet d'argon soufflé sur l'échantillon a un débit d'environ 3 l/mn.

5. Procédé selon l'une quelconque des revendications 1 à 4, **caractérisé en ce que** le faisceau laser forme sur l'échantillon une tache focale d'un diamètre d'environ 10 µm.

## Claims

1. Process for the elementary analysis of a solid sample, **characterized in that** it consists of:
- choosing a solid sample to be analyzed in a natural atmosphere without having to place said sample in a chamber constituting a confined zone,
- simultaneously focussing a laser beam (4) on said solid sample to be analyzed so as to produce a plasma (12) at an impact point (P) of the surface of said sample and blowing a gas jet directly onto said impact point (P) of the sample (6),
- analyzing a spectrum (S') of the light radiation emitted by the plasma and
- determining, on the basis of said spectrum analysis, the elementary composition of the solid sample.

2. Process according to claim 1, **characterized in that** the gas jet blown onto the solid sample is an argon jet.

3. Process according to claim 1 or 2, **characterized in that** the gas jet blown onto the sample has a diameter larger than that of the plasma obtained on the sample surface.

4. Process according to claim 2 or 3, **characterized in that** the argon jet blown onto the sample has a flow rate of approximately 3 l/mn.

5. Process according to any one of the claims 1 to 4, **characterized in that** the laser beam forms on the sample a focal spot with a diameter of approximately 10 µm.

## Patentansprüche

1. Verfahren zur Elementaranalyse einer festen Probe, **dadurch gekennzeichnet, dass** es darin besteht:
- eine in natürlicher Atmosphäre befindliche feste Probe zu analysieren, ohne diese Probe in einer sie einschließenden Kammer anordnen zu müssen;
- gleichzeitig einen Laserstrahl (4) auf die genannte feste Probe zu fokussieren, um in einem Auftreffpunkt (P) der Oberfläche dieser Probe ein Plasma (12) zu erzeugen, und mit einem Gasstrahl direkt auf diesen Auftreffpunkt (P) der Probe (6) zu blasen;
- ein Spektrum (S') der durch das Plasma emittierten Lichtstrahlung zu analysieren; und
- aufgrund dieser Spektrumsanalyse die elementare Zusammensetzung der festen Probe zu bestimmen.

2. Verfahren nach Anspruch 1, **dadurch gekennzeichnet, dass** der auf die feste Probe geblasene Gasstrahl ein Argonstrahl ist.

3. Verfahren nach Anspruch 1 oder 2, **dadurch gekennzeichnet, dass** der Durchmesser des auf die Probe geblasenen Gasstrahls größer ist als derjenige des Plasmas an der Probenoberfläche.

4. Verfahren nach Anspruch 2 oder 3, dass der auf die Probe geblasene Argonstrahl eine Durchsatz von ungefähr 3 l/min hat.

5. Verfahren nach einem der Ansprüche 1 bis 4, **dadurch gekennzeichnet, dass** der Laserstrahl auf der Probe einen Brennfleck mit einem Durchmesser von ungefähr 10 µm bildet.
